# FASCICULE DE BREVET EUROPEEN

(11) **EP 1 434 412 B1**
(45) Date de publication et mention de la délivrance du brevet: **18.02.2009**
(21) Numéro de dépôt: 03293038.0
(22) Date de dépôt: 05.12.2003
(51) Int. Cl.: H04M 1/247, G06F 3/033

(54) **Procédé de navigation optimisée dans les menus d'affichage d'un terminal mobile et terminal mobile associé**
Optimiertes Verfahren zur Navigation in angezeigten Menüs eines mobilen Endgerätes und dazugehöriges mobiles Endgerät
Optimised method of navigation between menus displayed on a mobile terminal and associated mobile terminal

(30) Priorité: 24.12.2002 FR 0216667
(43) Date de publication de la demande: 30.06.2004
(73) Titulaire: Societé Française du Radiotéléphone, 92915 Paris la Défense Cedex (FR)
(72) Inventeur: Foucher, Albert, 78000 Versailles (FR); Blanc, Michael, 75018 Paris (FR); Boris, Jean-Philippe, 75009 Paris (FR); Gambari, Olivier, 75014 Paris (FR); Pigeon, Benoît, 75005 Paris (FR); Prauda, Nanné, 75016 Paris (FR)
(74) Mandataire: Debay, Yves

(56) Documents cités:
- EP-A- 1 104 151
- US-A1- 2001 015 721
- US-A1- 2002 039 915

## Description

La présente invention concerne le domaine de la gestion des données dans un terminal mobile. La présente invention concerne plus particulièrement un procédé d'optimisation du système de gestion de la navigation des affichages dans un terminal mobile de radio communication et un terminal mobile pour la mise en oeuvre de ce procédé.

Dans ce qui suit, on entendra par terminal mobile tout équipement récepteur et éventuellement émetteur portatif, par exemple téléphone cellulaire ou communicateur portable. L'invention est plus particulièrement destinée à l'optimisation des interfaces entre un terminal mobile et un utilisateur.

De manière connue, un terminal mobile comprend comme éléments d'interface et d'interaction un écran d'affichage, un clavier et/ou un moyen de navigation. Il comprend aussi des logiciels, appelés "drivers", gérant le fonctionnement des périphériques. De nombreuses solutions ont été proposées pour accéder, archiver et gérer les données accessibles à partir d'une interface d'un terminal mobile. Il est ainsi connu, par le brevet EP 1 104 151, une interface améliorée fournissant de nombreuses fonctions à l'utilisateur. Ce type d'interface comprend une croix de navigation permettant à l'utilisateur d'avoir accès et interagir avec des applications à l'aide d'une seule main. Avec ce type d'interface est utilisé un mode d'affichage par fenêtres appelées de manière consacrée fenêtres empilables (en anglais pop-up). L'interface décrite dans ce document permet classiquement d'afficher des options pouvant être sélectionnées par l'utilisateur et listées dans un menu "pop-up" à liste ascendante/descendante d'articles, les options disponibles étant réparties dans différents groupes logiques d'options.

Dans l'art antérieur, les items accessibles dans un menu de sélection d'un carnet d'adresse ou d'une autre fonctionnalité classique se présentent ordinairement en mode liste ou en mode matriciel. Les actions de sélection dans ce type de menu classique consistent à valider l'item sélectionné à l'aide d'une croix de navigation. Suite à cette validation, un menu pop-up fournissant les données/options relatives à l'item sélectionné apparaît. Après une validation d'une de ces données/options, apparaît une fenêtre empilée en surimpression sur l'écran précédent ou dans un cadre de taille réduite. Les systèmes à interface de l'art antérieur présentent l'inconvénient que les différentes actions envisageables sur un item d'un menu de sélection ne sont accessibles qu'après validation et donc affichage des données relatives à cet item.

Le document US 2002/039915 de l'art antérieur divulgue un terminal de communication stockant des items composant un menu hiérarchisé. Ce terminal permet d'afficher des items selon une hiérarchie déterminée puis permet l'affichage d'items de niveau inférieur correspondant à un item qui a été sélectionné parmi les items affichés et ceci sans que l'utilisateur n'ait besoin de lancer une instruction d'affichage

Un objet de la présente invention est de supprimer un ou plusieurs des inconvénients de l'art antérieur en définissant un procédé d'optimisation du système de gestion d'un terminal mobile permettant d'accéder aux actions possibles sur un item de sélection sans affichage des données correspondantes.

Un des objets de la présente invention est également de rendre la totalité des actions envisageables accessibles à partir d'un item d'un menu de sélection, tout en évitant de présenter un trop grand nombre d'actions dans un même menu à liste ascendante/descendante "pop-up", en utilisant avantageusement un moyen de navigation du terminal mobile de manière à valider d'au moins deux façons différentes un même item sélectionné.

A cet effet, l'invention concerne un procédé de navigation optimisée dans les menus d'affichage d'un terminal mobile de radiocommunication, selon l'enseignement de la revendication 1.

Selon une autre particularité, lesdites première et deuxième fonctionnalités de la croix de navigation sont des fonctionnalités de déplacement à gauche, respectivement à droite.

L'invention permet donc de scinder en deux l'ensemble des actions concernant un item, une partie de ces actions étant accessible en appuyant à gauche sur la croix de navigation, une autre partie étant accessible en appuyant à droite. De manière classique, la sélection d'un item peut être effectuée par exemple en déplaçant un curseur ou analogue (soulignement, surbrillance) en appuyant en bas ou en haut sur la croix de navigation.

L'invention offre ainsi un procédé de navigation avec homogénéisation des actions, permettant de naviguer par simple réflexe, à l'image par exemple des boutons droit et gauche d'une souris d'ordinateur. Les actions peuvent être avantageusement spécialisées, quel que soit le service ou l'application traitée.

Selon d'autres particularités, le procédé est tel que défini dans les revendications 3 à 15.

Un autre but de l'invention est d'apporter une solution à un ou plusieurs des problèmes rencontrés dans l'art antérieur en définissant un terminal mobile amélioré pour la mise en oeuvre du procédé selon l'invention.

Ce but est atteint par un terminal mobile de radiocommunication pour la mise en oeuvre du procédé selon l'invention, comportant une interface avec l'utilisateur, ladite interface comprenant un moyen d'affichage, un système de gestion et au moins un moyen de commande intégré dit croix de navigation pour déplacer un curseur ou analogue sur ledit moyen d'affichage à l'aide d'une seule main, ledit terminal mobile étant caractérisé en ce que :
- le système de gestion comprend des premiers moyens de commande pour afficher simultanément sur ledit moyen d'affichage du terminal mobile une pluralité d'items de sélection dans un même menu dit menu de sélection,
- la croix de navigation comprend des fonctionnalités permettant de sélectionner les items d'un même menu de sélection ainsi que deux fonctionnalités complémentaires et spécialisées reliées à des moyens d'association,
- le système de gestion comprend des moyens de subdivision pour répartir en deux lots différents au moins à l'affichage les actions envisageables sur des données en relation avec l'item sélectionné dans ledit menu de sélection, lesdits moyens de subdivision étant reliés aux moyens d'association pour associer à chacune des fonctionnalités complémentaires et spécialisées de ladite croix de navigation, après activation par l'utilisateur, un lot correspondant parmi lesdits lots d'actions envisageables, le système de gestion comprenant des seconds moyens de commande activant les moyens d'association pour afficher un des lots dans un menu pop-up du moyen d'affichage.

L'invention, avec ses caractéristiques et avantages, ressortira plus clairement à la lecture de la description faite en référence aux dessins annexés donnés à titre d'exemples non limitatifs dans lesquels :
- la figure 1 représente une vue de face d'un terminal mobile et illustre un exemple de croix de navigation pouvant être utilisé dans l'invention,
- la figure 2 représente selon l'invention les évolutions possibles de l'écran d'affichage d'un terminal mobile,
- la figure 3 représente une variante de réalisation de l'évolution de l'affichage illustré à la figure 2 lorsque les nouvelles fenêtres ont un format réduit,
- la figure 4 représente schématiquement des exemples de progression logique des écrans d'affichage dans un mode de réalisation du procédé selon l'invention,
- la figure 5 représente de manière schématique un exemple d'arborescence pouvant être créée à l'aide du processus mis en oeuvre dans l'invention,
- la figure 6 représente un exemple de processus utilisé dans l'art antérieur pour accéder aux actions envisageables pour un item d'un menu de sélection,
- les figures 7a et 7b représentent une variante de réalisation d'un terminal mobile dont la croix de navigation s'apparente à un joystick.

La description suivante se réfère au domaine de la téléphonie mobile et en particulier des téléphones portables mais peut naturellement être étendue à d'autres types de terminal mobile.

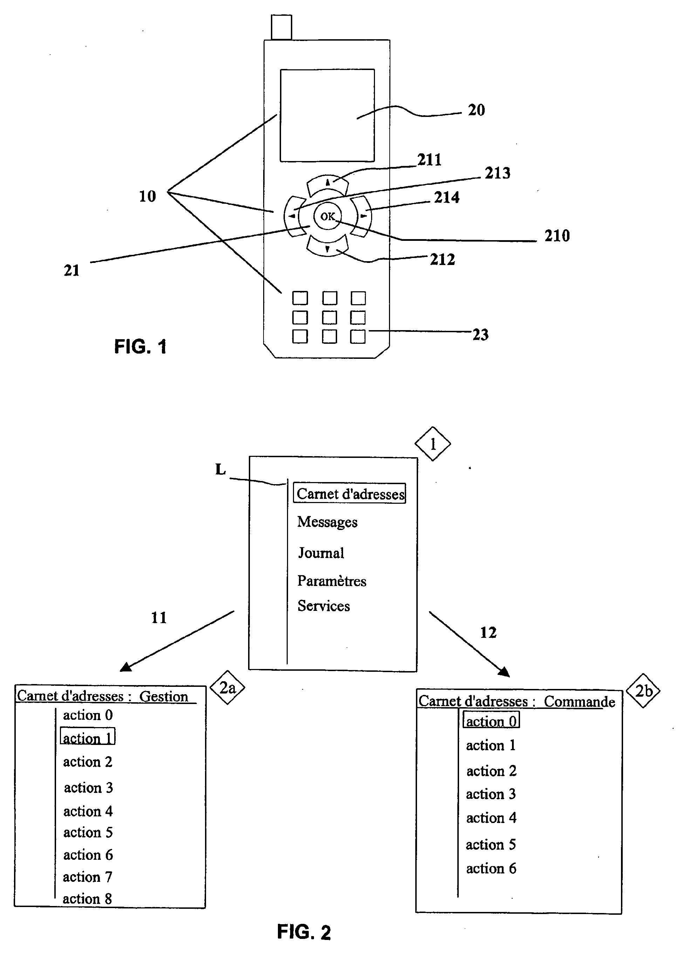

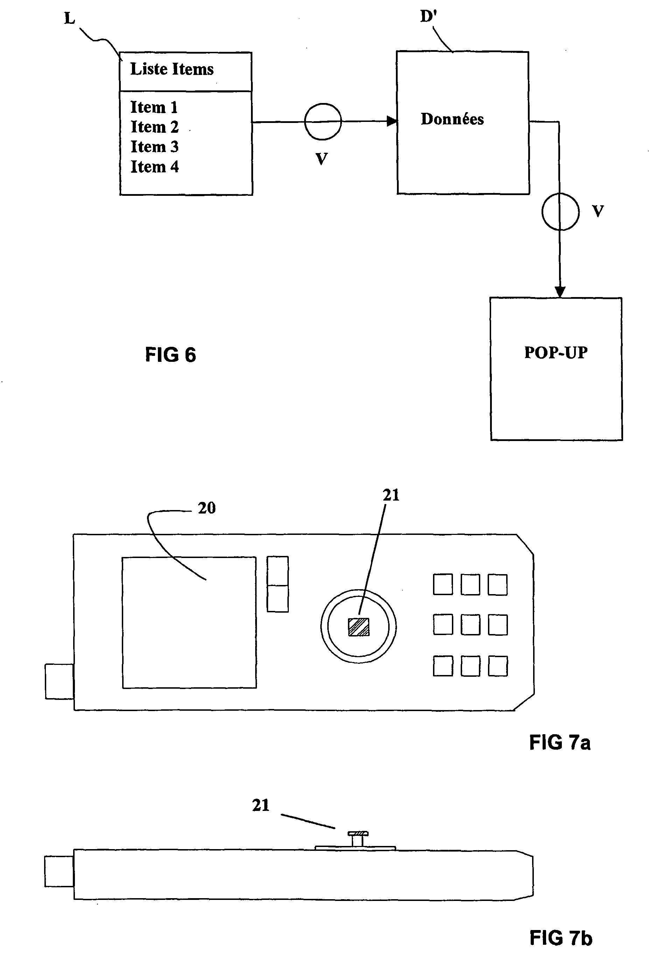

L'invention va à présent être décrite en liaison avec les figures 1 et 7.

Un exemple de terminal mobile avec lequel peut s'appliquer le procédé selon l'invention est représenté à la figure 1. Dans ce mode de réalisation particulier, le terminal mobile peut être un téléphone sans fil doté d'une interface (10) avec l'utilisateur. Comme illustré dans la figure 1, l'interface (10) avec l'utilisateur peut comprendre un moyen d'affichage (20), un clavier (23), une croix de navigation (21) ou tout autre dispositif de navigation permettant au moins deux degrés de déplacement, par exemple selon les axes x-y d'un système de coordonnées associé au moyen d'affichage (20). De manière non limitative, on appelle dans ce qui suit croix de navigation (21) tout dispositif intégré permettant de déplacer une sélection ou item sur l'écran du terminal mobile, en haut, en bas, à droite, à gauche, et à l'aide d'une touche centrale ou décalée, de valider cette sélection. Un curseur de sélection, une surbrillance, une bordure d'encadrement ou analogue peut ainsi être déplacé sur ledit moyen d'affichage (20) par des actions physiques exercées sur une telle croix de navigation (21).

Selon le mode de réalisation de la figure 1, la croix de navigation (21) se présente sous forme de boutons, par exemple avec 4 touches de défilement (211, 212, 213, 214) et une touche OK (210) séparée pour la validation, située au milieu des 4 autres touches. Dans les figures 7a et 7b, la croix de navigation se présente différemment, sous la forme d'un joystick à 4 directions avec un bouton Ok intégré ou séparé. La croix de navigation (21) est ainsi aisément manipulable à l'aide d'une seule main. Dans le cas d'un téléphone sans fil, l'interface (10) avec l'utilisateur comprend également un micro et un haut-parleur ou un écouteur (non représentés).

L'invention va à présent être décrite en liaison avec les figures 1, 2, 3 et 6.

Le procédé selon l'invention permet une optimisation du système de gestion d'un terminal mobile tel que celui présenté à la figure 1. Il donne notamment la possibilité d'accéder, d'archiver et de gérer les données accessibles à l'utilisateur à partir d'un moyen d'affichage (20) tel qu'un écran d'un type connu et d'une croix de navigation (21). Dans les modes de réalisation de l'art antérieur, sur les écrans d'un terminal mobile, les données sont accessibles par un ensemble d'items présentés en mode liste ou en mode matriciel. La figure 6 illustre un exemple courant de processus de l'art antérieur en partant d'une liste d'items (L). Selon le processus présenté en figure 6, les différentes actions envisageables sur l'item sélectionné ne sont accessibles qu'après validation (V) et donc affichage des données (D') relatives à cet item. Suite à une validation (V) supplémentaire, une nouvelle fenêtre pop-up s'affiche en surimpression sur l'écran du terminal mobile. A titre d'exemple, la gestion du carnet d'adresses se fait à partir de la liste de contacts. Dans l'exemple de la figure 6, les données correspondent aux différents numéros de téléphone, à l'adresse électronique, à l'adresse, etc., chaque item de la liste (L) correspondant au nom ou identifiant d'un contact.

A la différence du processus présenté à la figure 6, le procédé selon l'invention présente l'important avantage de permettre d'accéder directement aux actions possibles sur un item de la liste (L) sans affichage préalable des données correspondantes. Les items peuvent être présentés différemment que dans une liste, sous une forme ordonnée quelconque. Dans le mode de réalisation préféré de l'invention, à partir de l'ensemble des items d'un premier menu de sélection (1) affiché sur un moyen d'affichage (20) du terminal mobile, la croix de navigation (21) permet :
- avec des fonctionnalités de déplacement en haut (211) et en bas (212), de naviguer (1) dans la liste (L) d'un premier menu (1),
- avec une fonctionnalité (213) de déplacement à gauche, d'accéder (11) à un premier sous-menu d'une fenêtre pop-up (2a) de l'item du premier menu (1),
- avec une fonctionnalité (214) de déplacement à droite, d'accéder (12) à un second sous-menu d'une fenêtre pop-up (2b) de l'item du premier menu (1),
- avec une fonctionnalité (210) de validation (V), d'afficher des données relatives à l'item sélectionné lors de la navigation dans la liste (L) de l'un des menus ou sous-menus.

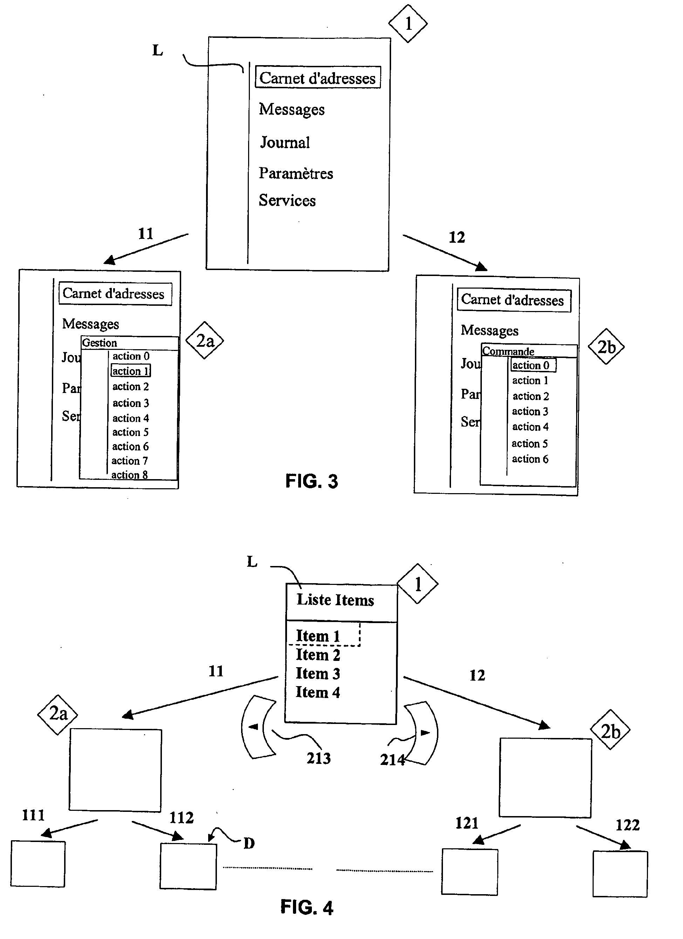

Dans des modes de réalisation différents, les fonctionnalités de déplacements peuvent être utilisées de manière différente, deux fonctionnalités complémentaires assurant respectivement l'accès au premier sous-menu pop-up, au second sous-menu pop-up. Chaque menu pop-up peut représenter une liste ou un ensemble ordonné analogue d'actions envisageables sur l'item sélectionné. Comme représenté aux figures 2 et 3, le mode d'affichage sur l'écran du terminal mobile des menus pop-up est en mode "plein écran" ou en mode "réduit", c'est-à-dire occupant la totalité de l'écran du terminal mobile ou non. Dans une variante de réalisation, lorsqu'un item de la liste (L) est sélectionné, ladite activation de la fonctionnalité (213) de déplacement à gauche de la croix de navigation (21) fait apparaître une fenêtre pop-up (2a) positionnée sur la gauche du moyen d'affichage (20). De manière équivalente, la fenêtre Pop-up (2b) activée à l'aide de la fonctionnalité (214) de déplacement à droite de la croix de navigation (21) apparaît sur la droite dudit moyen d'affichage (20).

Dans un mode de réalisation différent de l'invention, plusieurs fenêtres pop-up peuvent s'ouvrir en réponse à un déplacement gauche ou droit effectué à l'aide de la croix de navigation (21) lors de la navigation dans une liste (L) d'items d'un menu de sélection (1). Plusieurs sous-menus s'affichent par exemple dans des fenêtres pop-up différentes empilables en surimpression se répartissant sur le moyen d'affichage (20) du terminal mobile.

Dans le mode de réalisation des figures 3 et 4, l'item "carnet d'adresses" affiché dans un menu de sélection (1) est sélectionné à l'aide de la croix de navigation (21), par exemple avec les touches haut (211) et bas (212) du terminal illustré à la figure 1. Un premier menu, associé au carnet d'adresses, s'affiche dans une première fenêtre pop-up (2a) en réponse à l'appui sur la touche de gauche (213) de la croix de navigation (21). Un second menu, associé également au carnet d'adresses, s'affiche dans une seconde fenêtre pop-up (2b) en réponse à l'appui sur la touche de droite (214) de la croix de navigation (21). Le premier menu peut par exemple regrouper l'ensemble des actions destinées aux fonctions de gestion des données tandis que le second menu peut par exemple regrouper l'ensemble des fonctions de commande possibles sur les données du carnet d'adresses. Dans le cas illustratif et nullement limitatif de la gestion du carnet d'adresses, comme illustré aux figures 2 et 3, le système de gestion dudit carnet distingue deux subdivisions. Dans le premier menu de ladite première fenêtre pop-up (2a), correspondant à la gestion de données, on trouve par exemple les actions suivantes :
0. Consulter,
1. Modifier,
2. Supprimer,
3. Créer Contact,
4. Créer Répertoire,
5. Classer,
6. Reconnaissance vocale,
7. Retour,
8. Quitter.

Ces actions, numérotées de 1 à 8 dans les figures 2 et 3, peuvent être par exemple les actions de gestion. Dans le deuxième menu de ladite seconde fenêtre pop-up (2b), correspondant aux commandes sur les données, on trouve par exemple les actions suivantes :
0. Appeler,
1. Envoyer Message,
2. Transférer V-Card,
3. Localisation,
4. Envoi postal,
5. Retour,
6. Quitter.

Lesdites actions envisagées sont ainsi regroupées dans un lot d'actions par catégorie, la mention de la catégorie pouvant être affichée sur la fenêtre pop-up correspondante. Ainsi, par simple click gauche ou droit, l'invention permet l'accès à de telles fenêtres pop-up (2a, 2b) correspondant à des sous-menus spécialisés et dans lesquels les actions sont homogénéisées. Les touches de gauche (213) et de droite (214) peuvent être spécialisées de la sorte, selon la logique par exemple des figures 2 et 3, quel que soit le service ou l'application traitée.

L'invention va à présent être décrite en liaison avec les figures 4 et 5 et 6.

Comme illustré à la figure 4, le procédé selon l'invention consiste dans un premier temps à afficher, avec ledit moyen d'affichage, un menu de sélection (1) identifiant une pluralité d'items distincts dans une liste (L) ou analogue, puis à décliner de manière optimisée et homogène une pluralité d'options en relation avec l'item sélectionné. Après avoir placé le curseur ou équivalent sur un item de la liste (L), l'utilisateur peut manipuler aisément les fonctionnalités gauche (213) et droite (214) de la croix de navigation (21) pour accéder (11, 12) à des fenêtres (2a, 2b) à menu pop-up. Les options de ces menus pop-up peuvent alors être validées pour accéder (111, 112, 113, 114) à des données (D) spécifiques à l'option validée. Au contraire des données (D') présentées généralement sous la forme d'un groupement diffus, les données accédées par l'intermédiaire du procédé selon l'invention correspondent précisément à l'action que souhaite effectuer l'utilisateur.

Dans un mode de réalisation de l'invention, les items dudit menu de sélection (1) correspondent à des applications et/ou des options générales. Ils peuvent également correspondre à des états ou contextes. Le procédé selon l'invention peut s'appliquer avantageusement à tout type de données enregistrées, à des paramètres de réglage, à des options de configuration, une déclinaison de fonctionnalités générales/spécifiques, etc. De plus, il est possible de créer facilement et de manière efficace une arborescence des actions, chaque action intermédiaire pouvant correspondre à l'affichage d'une fenêtre pop-up. Ainsi, un ou plusieurs des items dudit menu de sélection (1) peut être rattaché à une ramification d'options et de sous-options accessibles par l'intermédiaire de ladite croix de navigation (21), chaque validation intermédiaire entre options et sous-options conduisant à l'affichage d'un menu des sous-options dans une fenêtre pop-up.

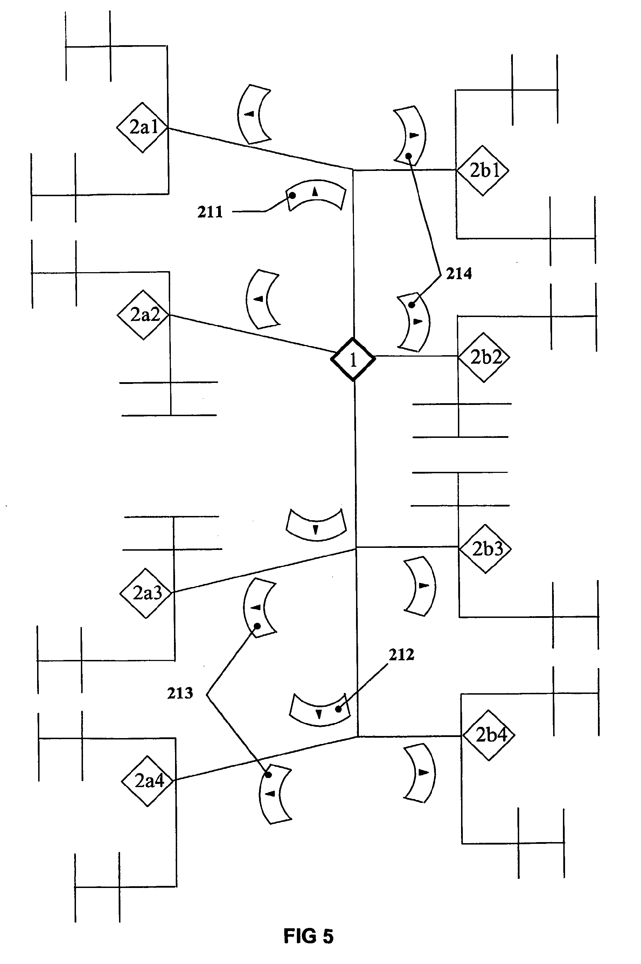

La figure 5 illustre un exemple d'arborescence pouvant être créée avec le processus de l'invention. A partir d'un menu de sélection (1) affichant par exemple quatre items, huit sous-menus peuvent être obtenus dans des fenêtres pop-up différentes (2a1, 2b1, 2a2, 2b2, 2a3, 2b3, 2a4, 2b4). Dans l'exemple de la figure 5, chacune des sous-options accessibles dans les sous-menus se subdivise elle-même en huit autres sous-menus de degré inférieur pouvant être accédés de manière analogue, à l'aide de la croix de navigation (21). La ramification engendrée par le processus selon l'invention permet à l'utilisateur de gagner du temps pour agir sur les données ou se servir des données dont il a besoin, sans exiger un affichage de toutes les autres données.

Dans un mode de réalisation de l'invention, le programme gestionnaire d'affichage est prévu pour que la fenêtre pop-up venant d'apparaître sur le moyen d'affichage (20) après l'activation d'une des fonctionnalités complémentaires gauche (213) ou droite (214) de la croix de navigation (21) disparaisse du moyen d'affichage (20) en cas d'activation consécutive de l'autre desdites fonctionnalités complémentaires (213, 214). Ainsi, dans l'exemple de la figure 5, la navigation est absolument réversible.

Le terminal mobile pour la mise en oeuvre du procédé selon l'invention comprend un système de gestion doté de premiers moyens de commande pour afficher simultanément sur ledit moyen d'affichage (20) du terminal mobile une pluralité d'items de sélection dans un même menu de sélection (1). Ce système de gestion comporte aussi des moyens dits de subdivision pour répartir en deux sous-menus différents les actions envisageables sur des données en relation avec l'item sélectionné dans le menu de sélection (1). Les moyens de subdivision dudit système de gestion comprennent des moyens d'association en liaison avec la croix de navigation (21), notamment en liaison avec les fonctionnalités complémentaires (213, 214) de la croix de navigation (21) activant l'affichage des fenêtres pop-up (2a, 2b). Ces moyens d'association permettent d'associer chacune desdites fonctionnalités complémentaires (213, 214) de la croix de navigation (21) à un sous-menu correspondant parmi lesdits sous-menus d'actions envisageables. Les sous-menus peuvent aussi bien être des sous-groupes d'actions affichés sous n'importe quelle forme ordonnée.

Le système de gestion comporte également des seconds moyens de commande activant lesdits moyens d'association pour faire apparaître un des desdits sous-menus dans une fenêtre pop-up du moyen d'affichage (20). Le système de gestion du terminal mobile permet donc, dans un mode de réalisation de l'invention, d'engendrer sur un écran d'affichage une fenêtre pop-up représentant un sous-menu associé à la fois à l'item du menu de sélection (1) désigné par le curseur et à la touche de navigation gauche (213) ou droite (214) sur laquelle a ensuite appuyé l'utilisateur.

Un des avantages de l'invention par rapport aux techniques existantes est qu'il permet de subdiviser les options accessibles, d'alléger ainsi le contenu des sous-menus, souvent riches en fonctionnalités, options, etc.

Un autre des avantages du procédé selon l'invention est la simplicité d'accès à des tâches, utilisations, manipulations de données, sans nécessiter l'affichage de nombreuses données pour lesquelles l'utilisateur n'a aucun intérêt dans l'immédiat.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé de navigation optimisée dans les menus d'affichage d'un terminal mobile de radiocommunication, dans lequel le terminal mobile est doté d'une interface (10) avec l'utilisateur qui comprend un moyen d'affichage (20) et au moins un moyen de commande intégré dit croix de navigation (21) pour déplacer par des actions physiques sur la croix (21) un curseur ou analogue sur le moyen d'affichage (20), ladite croix de navigation (21) comportant notamment deux fonctionnalités complémentaires (213, 214) aux fonctionnalités de défilement du curseur vers le haut et vers le bas (211, 212), le procédé comprenant les étapes suivantes:
- afficher avec le moyen d'affichage (20) un menu de sélection (1) identifiant une pluralité d'items distincts,
- manipuler la croix de navigation (21) pour sélectionner par l'une au moins des fonctionnalités de défilement (211, 212) un des items affichés dans le menu de sélection, puis
- afficher, en réponse à l'activation (11) d'une des fonctionnalités complémentaires dite première fonctionnalité (213) de la croix de navigation (21), un premier lot d'actions envisageables sur des données en relation avec l'item sélectionné dans le menu de sélection (1),
ledit procédé étant **caractérisé en ce qu'**il comprend en outre l'étape alternative d'afficher, en réponse à l'activation (12) de l'autre desdites fonctionnalités complémentaires dite deuxième fonctionnalité (214) de la croix de navigation (21), un second lot d'actions envisageables sur des données en relation avec l'item sélectionné dans ledit menu de sélection (1), lesdites première et deuxième fonctionnalités (213, 214) et lesdits premier et second lots d'actions ayant chacun une spécialisation différente :
- la première fonctionnalité (213) étant spécialisée pour la gestion des données, et le premier lot d'actions regroupant les fonctions de gestion,
- la seconde fonctionnalité (214) étant spécialisée pour les commandes possibles sur lesdites données, et le second lot d'actions regroupant les fonctions de commande.

2. Procédé selon la revendication 1, **caractérisé en ce que** lesdites première et deuxième fonctionnalités de la croix de navigation (21) sont des fonctionnalités de déplacement à gauche (213), respectivement à droite (214).

3. Procédé selon l'une quelconque des revendications 1 ou 2, **caractérisé en ce qu'**au moins une première fenêtre pop-up (2a, 2b) s'ouvre sur le moyen d'affichage (20) du terminal mobile en réponse à l'activation (11, 12) d'une première des fonctionnalités complémentaires (213, 214) de la croix de navigation (21).

4. Procédé selon la revendication 3, **caractérisé en ce qu'**au moins une seconde fenêtre pop-up (2a, 2b) s'ouvre sur le moyen d'affichage (20) du terminal mobile en réponse à l'activation (11, 12) d'une seconde des fonctionnalités complémentaires (213, 214) de la croix de navigation (21).

5. Procédé selon l'une quelconque des revendications 1 à 4, **caractérisé en ce qu'**une action sélectionnée par lesdits moyens de commande dans l'un des premier et second lots est validé par manipulation de ladite croix de navigation (21) en activant une fonctionnalité de validation (210) de l'action sélectionnée sur l'affichage

6. Procédé selon l'une quelconque des revendications 1 à 5, **caractérisé en ce que** le premier lot d'actions comprend les fonctions suivantes:
- Consulter,
- Modifier,
- Supprimer,
- Créer Contact,
- Créer Répertoire,
- Classer,
- Reconnaissance vocale,
- Retour,
- Quitter.

7. Procédé selon l'une quelconque des revendications 1 à 6, **caractérisé en ce que** le second lot d'actions comprend les fonctions suivantes:
- Appeler,
- Envoyer Message,
- Transférer V-Card,
- Localisation,
- Envoi postal,
- Retour,
- Quitter.

8. Procédé selon l'une quelconque des revendications 1 à 7, **caractérisé en ce que** ledit menu de sélection (1) et lesdits lots d'actions envisageables sont affichés sous forme d'une liste (L) ou d'une matrice, la sélection dans la liste (L) ou matrice s'effectuant à l'aide d'un curseur de sélection ou analogue déplacé par des fonctionnalités de déplacement en haut (211), respectivement en bas (212), de ladite croix de navigation (21).

9. Procédé selon l'une quelconque des revendications 5 à 8, **caractérisé en ce que** lesdites actions envisagées sont regroupées par catégorie dans lesdits lots, la menton de la catégorie étant affichée sur la fenêtre pop-up (2a, 2b) correspondant à un lot.

10. Procédé selon l'une quelconque des revendications 1 à 9, **caractérisé en ce que** les items dudit menu de sélection (1) correspondent à des applications.

11. Procédé selon l'une quelconque des revendications 1 à 10, **caractérisé en ce que** les items dudit menu de sélection (1) correspondent à des options générales.

12. Procédé selon l'une quelconque des revendications 1 à 11, **caractérisé en ce que** les items dudit menu de sélection (1) correspondent à des états ou contextes.

13. Procédé selon l'une quelconque des revendications 1 à 12, **caractérisé en ce que,** lors de la navigation dans ledit menu de sélection (1), ladite activation (11) de ladite première fonctionnalité (213) de la croix de navigation (21) entraîne l'affichage d'un menu pop-up sur une première partie couvrant au moins partiellement ledit moyen d'affichage (20), ladite activation (12) de ladite seconde fonctionnalité (214) de la croix de navigation (21) entraînant l'affichage d'un menu pop-up sur une seconde partie couvrant au moins partiellement ledit moyen d'affichage (20).

14. Procédé selon l'une quelconque des revendications 1 à 13, **caractérisé en ce qu'**au moins un item dudit menu de sélection (1) est rattaché à une ramification d'options et de sous-options accessibles par l'intermédiaire de ladite croix de navigation (21), chaque validation intermédiaire entre options et sous-options conduisant à l'affichage d'un menu des sous-options dans une fenêtre pop-up.

15. Procédé selon l'une quelconque des revendications 3 à 14, **caractérisé en ce que** la fenêtre pop-up (2a, 2b) venant d'apparaître sur le moyen d'affichage après l'activation (11, 12) d'une desdites fonctionnalités complémentaires (213, 214) disparaît du moyen d'affichage (20) en cas d'activation (11, 12) consécutive de l'autre desdites fonctionnalités complémentaires (213, 214).

16. Terminal mobile de radiocommunication pour la mise en oeuvre du procédé selon l'une des revendications 1 à 15, comportant une interface (10) avec l'utilisateur, ladite interface (10) comprenant un moyen d'affichage (20), un système de gestion et au moins un moyen de commande intégré dit croix de navigation (21) pour déplacer un curseur ou analogue sur ledit moyen d'affichage (20) à l'aide d'une seule main, ledit terminal mobile étant **caractérisé en ce que:**
- le système de gestion comprend des premiers moyens de commande pour afficher simultanément sur ledit moyen d'affichage (20) du terminal mobile une pluralité d'items de sélection dans un même menu dit menu de sélection (1),
- la croix de navigation (21) comprend des fonctionnalités (213, 214) permettant de sélectionner les items d'un même menu de sélection (1) ainsi que deux fonctionnalités complémentaires et spécialisées (211, 212) reliées à des moyens d'association,
- le système de gestion comprend des moyens de subdivision pour répartir au moins à l'affichage en deux lots différents les actions envisageables sur des données en relation avec l'item sélectionné dans ledit menu de sélection (1), lesdits moyens de subdivision étant reliés aux moyens d'association pour associer à chacune desdites fonctionnalités complémentaires et spécialisées (213, 214) de la croix de navigation (21), après activation par l'utilisateur, un lot correspondant parmi lesdits lots d'actions envisageables, le système de gestion comprenant des seconds moyens de commande (210) activant les moyens d'association pour afficher un des lots dans un menu pop-up du moyen d'affichage (20).

## Claims

1. Optimised method of navigation through the display menus of a mobile radio communication terminal, in which the mobile terminal is equipped with an interface (10) with the user that comprises a display means (20) and at least one integrated control means known as a navigation key (21) for moving a cursor or the like on the display means (20) by physical actions on the key (21), said navigation key (21) including in particular two functionalities (213, 214) in addition to the functionalities of scrolling the cursor up and down (211, 212), the method comprising the following steps:
- displaying with the display means (20) a selection menu (1) identifying a plurality of distinct items,
- manipulating the navigation key (21) in order to select, using at least one of the scrolling functionalities (211, 212), one of the items displayed in the selection menu, then
- in response to the activation (11) of one of the additional functionalities known as the first functionality (213) of the navigation key (21), displaying a first batch of possible actions on data in relation to the item selected from the selection menu (1),
said method being **characterised in that** it further comprises the alternative step of displaying, in response to the activation (12) of the other of said additional functionalities known as the second functionality (214) of the navigation key (21), a second batch of possible actions on data in relation to the item selected from said selection menu (1), said first and second functionalities (213, 214) and said first and second batches of actions each having a different specialisation:
- the first functionality (213) being specialised in data management, and the first batch of actions encompassing management functions,
- the second functionality (214) being specialised in possible commands on said data, and the second batch of actions encompassing control functions.

2. Method according to Claim 1, **characterised in that** said first and second functionalities of the navigation key (21) are functionalities of movement to the left (213) or to the right (214) respectively.

3. Method according to any one of Claims 1 or 2, **characterised in that** at least one first pop-up window (2a, 2b) opens on the display means (20) of the mobile terminal in response to the activation (11, 12) of a first one of the additional functionalities (213, 214) of the navigation key (21).

4. Method according to Claim 3, **characterised in that** at least one second pop-up window (2a, 2b) opens on the display means (20) of the mobile terminal in response to the activation (11, 12) of a second one of the additional functionalities (213, 214) of the navigation key (21).

5. Method according to any one of Claims 1 to 4, **characterised in that** an action selected by said control means from one of the first and second batches is validated by manipulating said navigation key (21) by activating a functionality of validation (210) of the action selected on the display.

6. Method according to any one of Claims 1 to 5, **characterised in that** the first batch of actions comprises the following functions:
- Look-up,
- Modify,
- Delete,
- Create a Contact,
- Create a Directory,
- File,
- Voice recognition,
- Return,
- Exit.

7. Method according to any one of Claims 1 to 6, **characterised in that** the second batch of actions comprises the following functions:
- Make a call,
- Send a Message,
- Transfer a V-Card,
- Locate,
- Send mail,
- Return,
- Exit.

8. Method according to any one of Claims 1 to 7, **characterised in that** said selection menu (1) and said batches of possible actions are displayed in the form of a list (L) or a matrix, selection from the list (L) or matrix being carried out by using a selection cursor or the like moved by upward (211) or downward (212) movement functionalities of said navigation key (21).

9. Method according to any one of Claims 5 to 8, **characterised in that** said envisaged actions are grouped by category in said batches, the name of the category being displayed in the pop-up window (2a, 2b), corresponding to a batch.

10. Method according to any one of Claims 1 to 9, **characterised in that** the items in said selection menu (1) correspond to applications.

11. Method according to any one of Claims 1 to 10, **characterised in that** the items in said selection menu (1) correspond to general options.

12. Method according to any one of Claims 1 to 11, **characterised in that** the items in said selection menu (1) correspond to states or contexts.

13. Method according to any one of Claims 1 to 12, **characterised in that,** at the time of navigation through said selection menu (1), said activation (11) of said first functionality (213) of the navigation key (21) results in the display of a pop-up menu in a first portion at least partly covering said display means (20), said activation (12) of said second functionality (214) of the navigation key (21) involving the display of a pop-up menu in a second portion at least partly covering said display means (20).

14. Method according to any one of Claims 1 to 13, **characterised in that** at least one item of said selection menu (1) is attached to a branching of options and sub-options accessible via said navigation key (21), each intermediate validation between options and sub-options leading to a menu of sub-options being displayed in a pop-up window.

15. Method according to any one of Claims 3 to 14, **characterised in that** the pop-up window (2a, 2b) that has just appeared on the display means after the activation (11, 12) of said additional functionalities (213, 214) disappears from the display means (20) if the other of said additional functionalities (213, 214) is subsequently activated (11, 12).

16. Mobile radio communication terminal for implementing the method according to one of Claims 1 to 15, including an interface (10) with the user, said interface (10) comprising a display means (20), a management system and at least one integrated control means known as a navigation key (21) for moving a cursor or the like on said display means (20) using just one hand, said mobile terminal being **characterised in that:**
- the management system comprises first control means for displaying simultaneously on said display means (20) of the mobile terminal a plurality of items for selection from the same menu, known as a selection menu (1),
- the navigation key (21) comprises functionalities (213, 214) making it possible to select the items from the same selection menu (1) together with two additional, specialised functionalities (211, 212) connected to association means,
- the management system comprises subdivision means for distributing at least on the display, in two different batches, the possible actions on data in relation to the item selected from said selection menu (1), said subdivision means being connected to the association means in order to associate with each of said additional, specialised functionalities (213, 214) of the navigation key (21), after activation by the user, a corresponding batch from among said batches of possible actions, the management system comprising second control means (210) activating the association means in order to display one of the batches in a pop-up menu of the display means (20).

## Patentansprüche

1. Verfahren zur optimierten Navigation in den Anzeigemenüs eines Mobilfunk-Endgerätes, wobei das mobile Endgerät eine Benutzerschnittstelle (10) aufweist, die ein Anzeigemittel (20) und mindestens ein integriertes Steuermittel aufweist, das als Navigationskreuz (21) bezeichnet wird, zum Bewegen durch physikalische Einwirkung auf das Kreuz (21) eines Cursors oder dergleichen auf dem Anzeigemittel (20), wobei das Navigationskreuz (21) insbesondere zwei zu den Scrolling-Funktionalitäten des Cursors nach oben und nach unten (211, 212) komplementäre Funktionalitäten (213, 214) aufweist, wobei das Verfahren die folgenden Schritte aufweist:
- Anzeigen mit dem Anzeigemittel (20) eines Auswahlmenüs (1), das eine Mehrzahl von verschiedenen Punkten identifiziert,
- Manipulieren des Navigationskreuzes (21) zum Auswählen durch mindestens eine der Scrolling-Funktionalitäten (211, 212) von einem der in dem Auswahlmenü angezeigten Punkte, anschließend
- in Antwort auf die Aktivierung (11) von einer der komplementären Funktionalitäten, die als erste Funktionalität (213) des Navigationskreuzes (21) bezeichnet wird, Anzeigen eines ersten Satzes von denkbaren Funktionen bei Daten in Verbindung mit dem in dem Auswahlmenü (1) ausgewählten Punkt,
wobei das Verfahren **dadurch gekennzeichnet ist, dass** es ferner in Antwort auf die Aktivierung (12) der anderen der komplementären Funktionalitäten, die als zweite Funktionalität (214) des Navigationskreuzes (21) bezeichnet wird, den alternativen Schritt des Anzeigens eines zweiten Satzes von denkbaren Funktionen bei Daten in Verbindung mit dem in dem Auswahlmenü (1) ausgewählten Punkt aufweist, wobei die erste und die zweite Funktionalität (213, 214) und der erste und der zweite Funktionssatz jeweils eine unterschiedliche Spezialisierung aufweisen,
- wobei die erste Funktionalität (213) für die Verwaltung der Daten spezialisiert ist und der erste Funktionssatz die Verwaltungsfunktionen umfasst,
- wobei die zweite Funktionalität (214) für die bei den Daten möglichen Befehle spezialisiert ist und der zweite Funktionssatz die Befehlsfunktionen umfasst.

2. Verfahren gemäß Anspruch 1, **dadurch gekennzeichnet, dass** die erste und die zweite Funktionalität des Navigationskreuzes (21) Funktionalitäten zum Bewegen nach links (213) beziehungsweise nach rechts (214) sind.

3. Verfahren gemäß einen der Ansprüche 1 oder 2, **dadurch gekennzeichnet, dass** sich mindestens ein erstes Pop-up-Fenster (2a, 2b) auf dem Anzeigemittel (20) des mobilen Endgerätes in Antwort auf die Aktivierung (11, 12) einer ersten der komplementären Funktionalitäten (213, 214) des Navigationskreuzes (21) öffnet.

4. Verfahren gemäß Anspruch 3, **dadurch gekennzeichnet, dass** sich mindestens ein zweites Pop-up-Fenster (2a, 2b) auf dem Anzeigemittel (20) des mobilen Endgerätes in Antwort auf die Aktivierung (11, 12) einer zweiten der komplementären Funktionalitäten (213, 214) des Navigationskreuzes (21) öffnet.

5. Verfahren gemäß einem der Ansprüche 1 bis 4, **dadurch gekennzeichnet, dass** eine durch die Steuermittel ausgewählte Funktion in einem von dem ersten und dem zweiten Satz mittels Manipulation des Navigationskreuzes (21) durch Aktivierung einer Validierungs-Funktionalität (210) der ausgewählten Funktion auf der Anzeige validiert wird.

6. Verfahren gemäß einem der Ansprüche 1 bis 5, **dadurch gekennzeichnet, dass** der erste Funktionssatz die folgenden Funktionen aufweist:
- Nachschlagen,
- Ändern,
- Löschen,
- Kontakt erstellen,
- Verzeichnis erstellen,
- Sortieren,
- Spracherkennung,
- Zurück,
- Beenden.

7. Verfahren gemäß einem der Ansprüche 1 bis 6, **dadurch gekennzeichnet, dass** der zweite Funktionssatz die folgenden Funktionen aufweist:
- Anrufen,
- Nachricht senden,
- V-Card übertragen,
- Lokalisieren,
- E-Mail senden,
- Zurück,
- Beenden.

8. Verfahren gemäß einem der Ansprüche 1 bis 7, **dadurch gekennzeichnet, dass** das Auswahlmenü (1) und die Sätze von denkbaren Funktionen in Form einer Liste (L) oder einer Matrix angezeigt werden, wobei das Auswählen in der Liste (L) oder der Matrix mit Hilfe eines Auswahl-Cursors oder dergleichen erfolgt, der durch Bewegungsfunktionalitäten nach oben (211) beziehungsweise nach unten (212) des Navigationskreuzes (21) bewegt wird.

9. Verfahren gemäß einem der Ansprüche 5 bis 8, **dadurch gekennzeichnet, dass** die vorgesehenen Funktionen nach Kategorie in den Sätzen zusammengefasst sind, wobei die Nennung der Kategorie in dem einem Satz entsprechenden Pop-up-Fenster (2a, 2b) angezeigt wird.

10. Verfahren gemäß einem der Ansprüche 1 bis 9, **dadurch gekennzeichnet, dass** die Punkte des Auswahlmenüs (1) Anwendungen entsprechen.

11. Verfahren gemäß einem der Ansprüche 1 bis 10, **dadurch gekennzeichnet, dass** die Punkte des Auswahlmenüs (1) allgemeinen Optionen entsprechen.

12. Verfahren gemäß einem der Ansprüche 1 bis 11, **dadurch gekennzeichnet, dass** die Punkte des Auswahlmenüs (1) Zuständen oder Kontexten entsprechen.

13. Verfahren gemäß einem der Ansprüche 1 bis 12, **dadurch gekennzeichnet, dass** bei der Navigation in dem Auswahlmenü (1) die Aktivierung (11) der ersten Funktionalität (213) des Navigationskreuzes (21) das Anzeigen eines Pop-up-Menüs auf einem ersten Teil bewirkt, der zumindest teilweise das Anzeigemittel (20) bedeckt, wobei die Aktivierung (12) der zweiten Funktionalität (214) des Navigationskreuzes (21) das Anzeigen eines Pop-up-Menüs auf einem zweiten Teil bewirkt, der zumindest teilweise das Anzeigemittel (20) bedeckt.

14. Verfahren gemäß einem der Ansprüche 1 bis 13, **dadurch gekennzeichnet, dass** zumindest ein Punkt des Auswahlmenüs (1) mit einer Verzweigung von Optionen und Unteroptionen verknüpft ist, auf die mittels des Navigationskreuzes (21) zugegriffen werden kann, wobei jede Zwischenvalidierung zwischen Optionen und Unteroptionen zu der Anzeige eines Unteroptionsmenüs in einem Pop-up-Fenster führt.

15. Verfahren gemäß einem der Ansprüche 3 bis 14, **dadurch gekennzeichnet, dass** das Pop-up-Fenster (2a, 2b), das soeben nach der Aktivierung (11, 12) von einer der komplementären Funktionalitäten (213, 214) auf dem Anzeigemittel erschienen ist, im Fall einer darauffolgenden Aktivierung (11, 12) der anderen der komplementären Funktionalitäten (213, 214) von dem Anzeigemittel (20) verschwindet.

16. Mobilfunk-Endgerät zum Durchführen des Verfahrens gemäß einem der Ansprüche 1 bis 15, eine Benutzerschnittstelle (10) aufweisend, wobei die Schnittstelle (10) aufweist: ein Anzeigemittel (20), ein Verwaltungssystem und mindestens ein integriertes Steuermittel, das als Navigationskreuz (21) bezeichnet wird, zum Bewegen eines Cursors oder dergleichen auf dem Anzeigemittel (20) mit Hilfe einer einzigen Hand, wobei das mobile Endgerät **dadurch gekennzeichnet ist, dass**
- das Verwaltungssystem erste Steuermittel aufweist, zum gleichzeitigen Anzeigen auf dem Anzeigemittel (20) des mobilen Endgerätes einer Mehrzahl von Auswahlpunkten in einem selben Menü, das als Auswahlmenü (1) bezeichnet wird,
- das Navigationskreuz (21) aufweist: Funktionalitäten (213, 214), die ein Auswählen der Punkte eines selben Auswahlmenüs (1) ermöglichen, sowie zwei komplementäre und spezialisierte Funktionalitäten (211, 212), die mit Verknüpfungsmitteln verbunden sind,
- das Verwaltungssystem Unterteilungsmittel aufweist, zum Aufteilen der Funktionen, die bei Daten in Bezug auf den in dem Auswahlmenü (1) ausgewählten Punkt denkbar sind, zumindest beim Anzeigen, in zwei verschiedene Sätze, wobei die Unterteilungsmittel mit den Verknüpfungsmitteln verbunden sind, zum Verknüpfen mit jeder der komplementären und spezialisierten Funktionalitäten (213, 214) des Navigationskreuzes (21) nach der Aktivierung durch den Benutzer eines entsprechenden Satzes aus den Sätzen von denkbaren Aktionen, wobei das Verwaltungssystem zweite Steuermittel (210) aufweist, die die Verknüpfungsmittel aktivieren, so dass einer der Sätze in einem Pop-up-Menü des Anzeigemittels (20) angezeigt wird.
